# EUROPÄISCHE PATENTSCHRIFT

(11) **EP 3 140 631 B1**
(45) Veröffentlichungstag und Bekanntmachung des Hinweises auf die Patenterteilung: **18.07.2018**
(21) Anmeldenummer: 15722980.8
(22) Anmeldetag: 06.05.2015
(51) Int. Cl.: F16C 13/04, F16C 17/02, F16C 17/26, G01M 1/04, F16C 23/02

(54) **VORRICHTUNG ZUR DREHBAREN LAGERUNG VON WERKSTÜCKEN, INSBESONDERE KURBELWELLEN**
DEVICE FOR ROTATABLE MOUNTING OF WORK PIECES, IN PARTICULAR CRANKSHAFTS
DISPOSITIF POUR SUPPORTER À ROTATION DES PIÈCES, NOTAMMENT DES VILEBREQUINS

(30) Priorität: 07.05.2014 DE 102014106334
(43) Veröffentlichungstag der Anmeldung: 15.03.2017
(73) Patentinhaber: Schenck RoTec GmbH, 64293 Darmstadt (DE)
(72) Erfinder: BÄHR, Joachim, 64297 Darmstadt (DE); KREUZER, Sebastian, 64293 Darmstadt (DE)
(74) Vertreter: Haar, Lucas Heinz Jörn
(86) Internationale Anmeldenummer: PCT/EP2015/059904
(87) Internationale Veröffentlichungsnummer: WO 2015/169823

(56) Entgegenhaltungen:
- EP-A1- 0 997 276
- DE-C- 355 241
- GB-A- 714 351
- US-A- 3 452 604

## Beschreibung

Die Erfindung betrifft eine Vorrichtung zur Aufnahme von auszugleichenden Werkstücken, insbesondere Kurbelwellen, in einer Maschine zur Durchführung eines Unwuchtausgleichs mit einer auf einem Maschinengestell angeordneten Lagereinrichtung zur drehbaren Lagerung des Werkstücks um eine Lagerachse.

Auswuchtmaschinen dienen zum Messen und Ausgleichen der Unwucht von Rotoren und werden in der Regel für verschiedene Rotoren eingesetzt, die sich in Bezug auf die Durchmesser und auch die axiale Lage ihrer Lager voneinander unterscheiden. Ein typisches Beispiel hierfür sind für verschiedene Motoren bestimmte Kurbelwellen, die unterschiedliche Hauptlagerdurchmesser, verschiedene Teilungen und verschiedene Längen haben können. Für das präzise Ausgleichen einer vorhandenen Unwucht muss der jeweilige Rotor an seinen Lagerflächen in einer zur Lagerachse der Auswuchtmaschine zentrierten Lage aufgenommen werden. Die Aufnahme erfolgt durch Lagerelemente einer Lagereinrichtung, wobei die Lagerelemente zur exakten Zentrierung des Rotors jeweils an den Durchmesser der Rotorlager angepasst sein müssen. Sollen nun Rotoren mit verschiedenen Lagerdurchmessern abwechselnd ausgewuchtet werden, so erfordert dies jeweils eine Umrüstung der Lagereinrichtung zur Anpassung der Lagerelemente an den aufzunehmenden Lagerdurchmesser. Im Bestreben, den Unwuchtausgleich von Rotoren, beispielsweise Kurbelwellen, zu automatisieren, ist auch ein automatisches Umrüsten der Rotoraufnahme für einen Wechsel des aufzunehmenden Rotortyps wünschenswert.

Aus EP 0 803 720 A2 ist eine Unwuchtmessstation zur Bestimmung der Unwucht von Rotoren, die mehrere Lagerstellen aufweisen, insbesondere Kurbelwellen, bekannt, die auf einer Schwingbrücke abgestützte Lagereinrichtungen zur rotierbaren Lagerung des Rotors aufweist. Um die Unwucht unterschiedlicher Rotoren ohne aufwändige Umrüstaktionen bestimmen zu können, sind an der Schwingbrücke mehr als zwei Lagereinrichtungen zur rotierbaren Lagerung des Rotors angeordnet und es ist eine Einrichtung vorgesehen, mit der der radiale Abstand zwischen Lagerstellen am Rotor und zugehörigen Lagereinrichtungen der Unwuchtmessstation derart veränderbar ist, dass der Rotor an zwei ausgewählten Lagerstellen nur auf den diesen zugeordneten Lagereinrichtungen drehbar abgestützt ist. Bei der bekannten Messstation liegen alle Lagereinrichtungen in axialer Richtung nebeneinander, so dass die Einlagerung verschiedener Wellendurchmesser nur an verschiedenen axialen Stellen erfolgen kann. Für verschiedene Lagerdurchmesser in der gleichen Lagerebene eignet sich die bekannte Unwuchtmessstation nicht.

Aus US 3 090 237 ist eine Einrichtung zum Auswuchten von Rotoren bekannt, bei der zwei Lagerständer an einer beliebigen Stelle längs einer sich in Achsrichtung erstreckenden Maschine befestigt werden können. Die Lagerständer weisen an verstellbaren Scherenhebeln angeordnete Lagerrollen auf, die in ihrer Höhe und in ihrem horizontalen Abstand auf unterschiedliche Lagerdurchmesser eines auszuwuchtenden Rotors eingestellt werden können. Die Verstellbewegung der Rollen ist hierbei so gestaltet, dass bei allen Einstellungen die Lage der Drehachse der Lagerung in Bezug auf den Lagerständer unverändert bleibt.

Eine aus DE 103 16 767 A1 bekannte Unwuchtmesseinrichtung weist zur Aufnahme von Rotorumfangsabschnitten eine Lagereinrichtung mit offenen fluidversorgten Lagerschalen und den Rotorendflächen zugeordneten fluidversorgten Lagerplatten auf. Zur Anpassung an verschiedene Rotortypen sind die Lagerschalen und die Lagerplatten austauschbar an Trägern befestigt, die an einer Lagerbrücke angeordnet sind.

Zur Lagerung der Wellenenden von Tiefdruckzylindern in einer Bearbeitungsmaschine ist es aus EP 0 579 969 A1 bekannt, in einem Lagerbock zwei Drehkörper anzuordnen, die jeweils aus drei Lagerschalen, die sich durch ihren Nenndurchmesser unterscheiden, zusammengesetzt sind. Durch Drehen der beiden Drehkörper kann jeweils eine der Lagerschalen in Arbeitsstellung gebracht werden. Auf diese Weise ist es möglich, Wellenenden von drei unterschiedlichen Durchmessern in dem Lagerbock zu lagern.

Aus US 3,452,604 A ist ein Kopf einer Unwuchtmessvorrichtung bekannt, mit einer wiegeförmigen Aufnahme zur Aufnahme von Rotoren, die entlang einer horizontalen Achse bewegt werden kann. Die Rotoren werden in der Aufnahme von einem Paar Rollen getragen.

GB 714 351 A offenbart eine Auswuchtmaschine zur Auswuchtung von Rotoren, wobei die Rotoren in einer Aufnahme gelagert sind, die in einer horizontalen Achse verschiebbar ist.

EP 0 997 276 A1 beschreibt eine Vorrichtung zur Positionierung mindestens eines Zylinders in einer Druckmaschine, wobei der Zylinder drehbar in einem Träger gelagert ist und zusammen mit dem Träger eine in verschiedene Positionen verstellbare Einheit bildet.

Der Erfindung liegt die Aufgabe zugrunde, eine Vorrichtung der eingangs genannten Art zu schaffen, die eine automatische Einstellung der Lagereinrichtung auf zwei oder mehr in der gleichen Lagerebene liegenden Lagerdurchmesser ermöglicht. Die Vorrichtung soll weiterhin einfach und kostengünstig herstellbar sein und in jeder Einstellung eine genaue Zentrierung der Lagereinrichtung zur Lagerachse gewährleisten.

Die Aufgabe wird durch eine Vorrichtung mit den in Anspruch 1 angegebenen Merkmalen gelöst. Vorteilhafte Ausgestaltungen der Vorrichtung sind in den Unteransprüchen angegeben.

Bei der Vorrichtung nach der Erfindung weist die Lagereinrichtung wenigstens einen Lagerbock mit wenigstens zwei Lagerelementen verschieden großen Durchmessers auf, die quer zur Lagerachse nebeneinander liegen, wobei der Lagerbock quer zur Lagerachse der Lagereinrichtung in zwei Lagerstellungen bewegbar ist und wobei in jeder der beiden Lagerstellungen ein anderes der beiden Lagerelemente zentrisch zur Lagerachse ausgerichtet ist.

Bei der Vorrichtung nach der Erfindung erfolgt das Umrüsten auf einen anderen Lagerdurchmesser durch das Bewegen des Lagerbocks in der Lagerebene von einer Lagerstellung in eine zweite, wobei in beiden Lagerstellungen die Lagerelemente verschiedenen Durchmessers exakt zentriert sind.

Das Bewegen des Lagerbocks kann auf einfache Weise automatisch mit Hilfe eines Antriebs erfolgen, wobei die Lagerstellungen durch die Bewegungen des Lagerbocks begrenzende Anschlagmittel exakt definiert werden können. Die Anschlagmittel können einstellbar sein.

Die Vorrichtung nach der Erfindung hat den Vorteil, dass beliebige Lagerelemente verwendet werden können. Insbesondere können die Lagerelemente aus Lagerschalen bestehen, die eine stabile und wiederholgenaue Abstützung des auszugleichenden Werkstücks gewährleisten. Die Lagerelemente können auswechselbar am Lagerbock angebracht sein. Auf diese Weise ist es möglich, durch Auswechseln der Lagerelemente die Lagereinrichtung mit einem anderen Lagerdurchmesser zu versehen.

Nach der Erfindung ist der wenigstens eine Lagerbock in Richtung der Lagerachse gegenüber dem Maschinengestell verstellbar. Auf diese Weise kann die Vorrichtung an verschiedene Positionen und Abstände der Werkstücklager angepasst werden. Auch die axiale Verstellbarkeit kann automatisch mit Hilfe eines Stellmotors und einer Überwachung und Steuerung des axialen Stellwegs erfolgen.

Nach der Erfindung ist der wenigstens eine Lagerbock auf einem Schlitten angeordnet, der längs einer auf einem Schlittenträger ausgebildeten Geradführung bewegbar ist. An dem Schlittenträger befindet sich eine Antriebsvorrichtung, durch die der Schlitten in seine Lagerstellungen bewegbar ist. Die Antriebsvorrichtung kann beliebig gestaltet sein. Vorteilhaft ist eine Ausgestaltung, bei der die Antriebsvorrichtung einen pneumatischen Antriebszylinder und ein Hebelgetriebe zur Übertragung der Bewegung des Antriebszylinders auf den Schlitten aufweist.

Der Schlittenträger kann weiterhin in einer an dem Maschinengestell angeordneten, zur Lagerachse parallelen Geradführung bewegbar gelagert sein. Hierdurch kann auf einfache Weise die Verstellung des Lagerbocks gegenüber dem Maschinengestell in Richtung der Lagerachse ermöglicht werden. Zur automatischen Durchführung der Verstellung kann dabei ein Stellantrieb zum Bewegen des Schlittenträgers gegenüber dem Maschinengestell vorgesehen sein.

Bewegen des Schlittenträgers gegenüber dem Maschinengestell vorgesehen sein.

Die Erfindung wird nachfolgend anhand eines Ausführungsbeispiels näher erläutert, das in der Zeichnung dargestellt ist. Es zeigen
- Figur 1: eine perspektivische Ansicht einer Vorrichtung zur Aufnahme und Positionierung einer Kurbelwelle in einer Maschine zur Durchführung eines Unwuchtausgleichs,

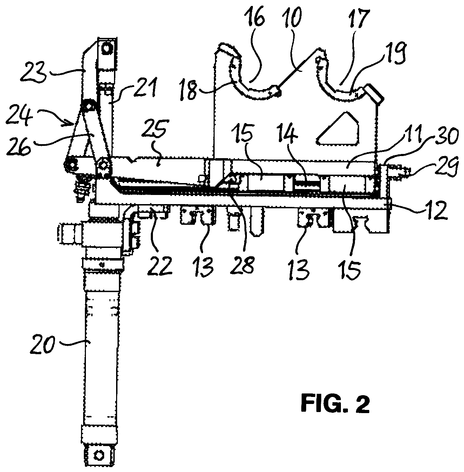

- Figur 2: eine Seitenansicht einer Einheit aus Lagerbock, Schlitten und Schlittenträger der Vorrichtung gemäß Figur 1,
- Figur 3: eine perspektivische Ansicht der Einheit gemäß Figur 2 und
- Figur 4: einen Abschnitt des Lagerbocks gemäß Figur 3 mit darin angeordnetem Lagerelement.

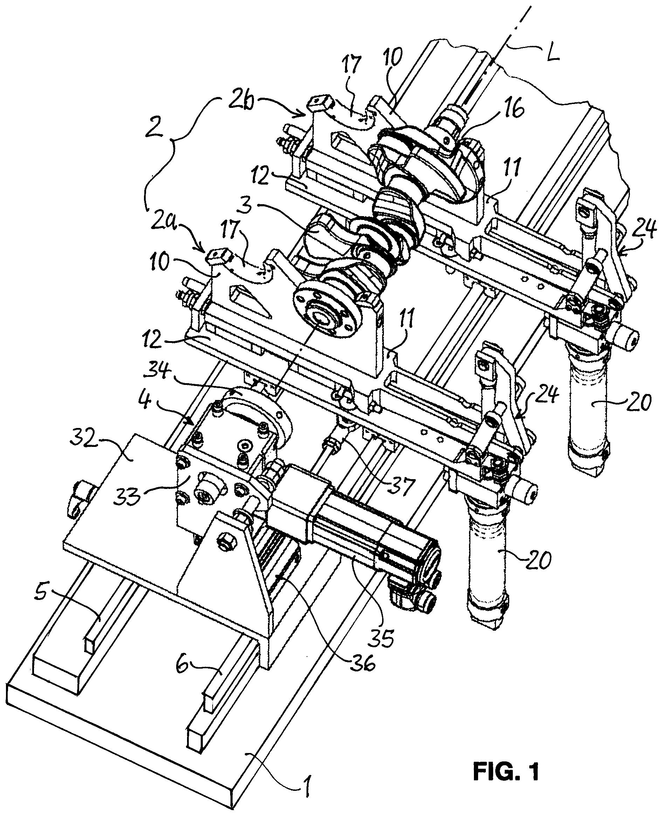

In Figur 1 ist von oben ein plattenförmiges Oberteil 1 eines Maschinengestells zu sehen, auf dem eine Lagereinrichtung 2 zur Lagerung eines Werkstücks 3, hier einer Kurbelwelle, und ein Eindrehwerk 4 angeordnet sind. Das Oberteil 1 weist parallele Führungsschienen 5, 6 auf, die eine Geradführung bilden, an der die Lagereinrichtung 2 und das Eindrehwerk 4 gehalten und in Führungsrichtung bewegbar gelagert sind.

Die Lagereinrichtung 2 umfasst zwei baugleiche Einheiten 2a, 2b, die nebeneinander angeordnet sind. Die Einheiten 2a, 2b können unabhängig voneinander längs der Führungsschienen 5, 6 bewegt werden. Jede Einheit 2a, 2b weist einen plattenförmigen Lagerbock 10, einen den Lagerbock 10 tragenden Schlitten 11 und einen Schlittenträger 12 auf, auf dem der Schlitten 11 gradlinig bewegbar gelagert ist. Der Schlittenträger 12 ist an der Unterseite mit Führungselementen 13 versehen, die ihn an den Führungsschienen 5, 6 halten und führen. Auf seiner Oberseite weist der Schlittenträger 12 eine Führungsschiene 14 auf, die parallel zu einer zu den Führungsschienen 5, 6 senkrechten Ebene ausgerichtet ist. Der Schlitten 11 ist mittels Führungselementen 15 an der Führungsschiene 14 bewegbar gelagert.

Der plattenförmige Lagerbock 10 ist parallel zu einer zu den Führungsschienen 5, 6 senkrechten Ebene ausgerichtet und weist an seiner Oberseite in einem Abstand voneinander zwei verschieden große Lager 16, 17 mit Lagerschalen 18, 19 auf.

Zum Bewegen des Schlittens 11 längs der Führungsschiene 14 ist an dem Schlittenträger 12 ein pneumatischer Arbeitszylinder 20 angeordnet, dessen Längsachse senkrecht zur Bewegungsebene des Schlittenträgers 12 ausgerichtet ist. Der Arbeitszylinder 20 ist mit dem Austrittsende für seine Kolbenstange 21 mittels eines Winkelstücks 22 an der Unterseite des Schlittenträgers 12 befestigt, so dass die Kolbenstange 21 in der in der Zeichnung gezeigten, ausgefahrenen Stellung nach oben über den Schlittenträger 12 hinausragt.

Das Ende der Kolbenstange 21 ist mit dem Ende eines zweiarmigen Hebels 23 eines Hebelgetriebes 24 verbunden, das die Bewegung der Kolbenstange 21 auf den Schlitten 11 überträgt. Der Schlitten 11 weist hierzu eine Gabel 25 auf, deren freie Enden mit dem anderen Ende des Hebels 23 gelenkig verbunden sind. In der Mitte ist der Hebel 23 an den Enden von Hebelstützen 26 drehbar gelagert, deren entgegengesetzte Enden drehbar an dem Schlittenträger 12 befestigt sind.

Die Figuren zeigen den Schlitten 11 in der Endstellung bei ausgefahrener Kolbenstange 21, in der sich das Lager 16 des Lagerbocks 10 in der Lagerstellung für den Unwuchtausgleich befindet. Zum Verschieben des Lagerbocks 10 in die andere Lagerstellung, in der sich das Lager 17 an der Stelle des Lagers 16 befindet, wird die Kolbenstange 21 in den Arbeitszylinder 20 eingezogen. Bei diesem Vorgang werden der Hebel 23 und die Hebelstützen 26 gegensinnig gedreht und der sich von der Kolbenstange 21 entfernende Hebel 23 zieht den Schlitten 11 nahe an die Kolbenstange 21 heran. Die Endstellung des Schlittens 11 wird durch eine am Schlitten 11 angebrachte Anschlagschraube 28 bestimmt, die an dem von dem Schlittenträger 12 hochstehenden Lagerelement zur drehbaren Lagerung der Hebelstütze 26 zur Anlage kommt.

Die entgegengesetzte Endstellung begrenzt eine einstellbare Anschlagschraube 29, die in einer hochstehenden Endplatte 30 des Schlittenträgers 12 angeordnet ist.

Das auf dem Oberteil 1 angeordnete Eindrehwerk 4 ist auf einem Schlitten 32 angeordnet, der ebenfalls an den Führungsschienen 5, 6 bewegbar gelagert ist. Auf dem Schlitten 32 ist ein Spindelgehäuse 33 mit einer drehbaren Eindrehspindel 34 angeordnet, die durch einen Stellmotor 35 in beliebig vorgebbare Drehwinkelpositionen gedreht werden kann. Auf dem Schlitten 32 befindet sich außerdem ein Linearantrieb 36, der durch eine Antriebsstange 37 mit dem Schlittenträger 12 der Einheit 2a verbunden ist und der dazu dient, das Eindrehwerk 4 an das in der Lagereinrichtung 2 gelagerte Werkstück 3 heran zu bewegen, damit die Eindrehspindel 34 an das Werkstück 3 angekuppelt werden kann.

Figur 1 zeigt die Lagereinrichtung 2 in einer Stellung, in der die Lagerböcke 10 der Einheiten 2a, 2b den für die Einlagerung des hier aus einer Kurbelwelle für eine Dreizylindermaschine bestehenden Werkstücks 3 richtigen Abstand haben und ihre in der Lagerstellung befindlichen Lager 16 mit Lagerschalen versehen sind, deren Durchmesser dem Durchmesser der Werkstücklager entspricht.

Die Lager 16 der Lagerböcke 10 bestimmen in dieser Stellung mit ihren Mittelpunkten eine Lagerachse L, die mit der Drehachse des eingelagerten Werkstücks 3 übereinstimmt. Das Eindrehwerk 4 ist so auf dem Oberteil 1 angeordnet, dass die Drehachse der Eindrehspindel 34 mit der Lagerachse L zusammenfällt. Auf diese Weise kann die Eindrehspindel 34 direkt mit dem Flansch des Werkstücks 3 gekuppelt werden. Zum Unwuchtausgleich wird das Werkstück 3 mittels der Eindrehspindel 34 in die zuvor ermittelte Ausgleichsposition gedreht. Mittels einer über der Ausgleichsposition angeordneten Bohreinrichtung, die nicht dargestellt ist, kann dann durch Entfernen von Material des Werkstücks 3 der Unwuchtausgleich erfolgen.

Soll in der Vorrichtung ein Werkstück aufgenommen werden, dessen Lager einen vom Werkstück 3 verschiedenen Durchmesser haben, so werden die Lager 17 der Lagerböcke 10 mit Lagerschalen 19 versehen, die einen für dieses andere Werkstück passenden Lagerdurchmesser haben und deren Mittelpunkte in einer die Lagerachse L enthaltende und zur geradlinigen Bewegung des Schlittens 11 parallelen Ebene liegen. Zur Einlagerung des anderen Werkstücks werden nach Entnahme des Werkstücks 3 die Antriebszylinder 20 so angesteuert, dass die Kolbenstangen 21 in eine eingezogene Stellung bewegt und dadurch die Lagerböcke 10 in die andere, an die Kolbenstangen 21 angenäherte Stellung bewegt werden. In dieser Stellung der Lagerböcke 10 befindet sich die jetzt durch die Lagerschalen 19 bestimmte Lagerachse L an der gleichen Stelle wie zuvor die Lagerachse L der Lagerschalen 18. Das in den Lagerschalen 19 befindliche Werkstück kann dann wie zuvor beschrieben an die Eindrehspindel gekuppelt, eingedreht und ausgeglichen werden.

Zur Lagerung längerer oder kürzerer Werkstücke oder von Werkstücken mit einem anderen Lagerabstand können die Einheiten 2a, 2b der Lagereinrichtung 2 längs der Führungsschienen 5, 6 relativ zueinander verschoben werden. Das Verschieben kann mittels nicht dargestellter Stellantriebe anhand vorgegebener oder zuvor erfasster Stellungsdaten vollautomatisch erfolgen.

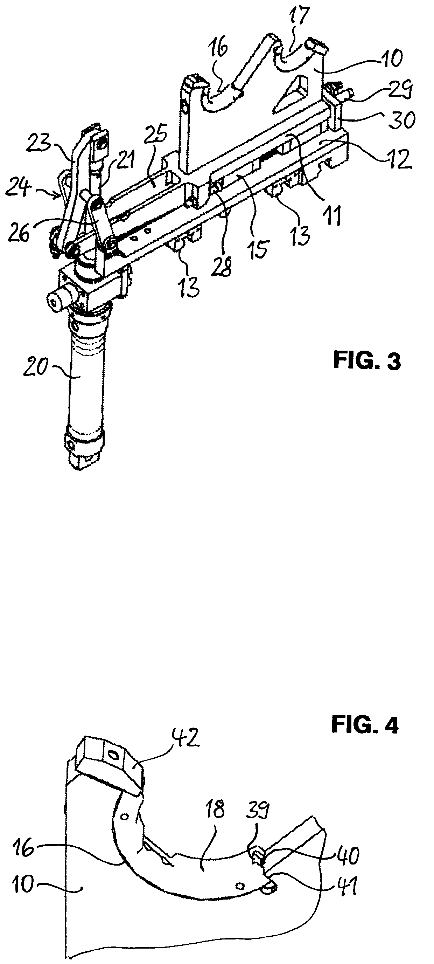

Figur 4 zeigt die Befestigung einer Lagerschale 18 in dem Lager 16 eines Lagerbocks 10. Die Lagerschale 18 ruht mit einer zur Lagermitte konzentrischen Zylinderfläche in einer konzentrischen zylindrischen Ausnehmung 38 des Lagerbocks 10. An ihren Enden hat die Lagerschale 18 Nuten 39, in die Vorsprünge 40 eingreifen, die an einer Schulter 41 des Lagerbocks 10 und an einem lösbaren Halteelement 42 ausgebildet sind. Durch die Vorsprünge 40 ist die Lagerschale 18 in axialer Richtung fixiert. Zum Auswechseln der Lagerschale 18 wird das von einer Schraube gehaltene Halteelement 42 gelöst. Die Befestigung der Lagerschale 19 ist in der gleichen Weise ausgebildet.

## Patentansprüche

1. Vorrichtung zur Aufnahme von auszugleichenden Werkstücken in einer Maschine zur Durchführung eines Unwuchtausgleichs mit einer auf einem Maschinengestell angeordneten Lagereinrichtung (2) zur drehbaren Lagerung des Werkstücks (3) um eine Lagerachse (L), **dadurch gekennzeichnet, dass** die Lagereinrichtung (2) wenigstens einen Lagerbock (10) mit zwei Lagerelementen verschieden großen Durchmessers aufweist, die quer zur Lagerachse (L) nebeneinander liegen, wobei der Lagerbock (10) quer zur Lagerachse (L) der Lagereinrichtung in zwei Lagerstellungen bewegbar ist und wobei in jeder der beiden Lagerstellungen ein anderes der beiden Lagerelemente zentrisch zur Lagerachse (L) ausgerichtet ist, wobei der wenigstens eine Lagerbock (10) in Richtung der Lagerachse (L) gegenüber dem Maschinengestell verstellbar ist, und wobei der wenigstens eine Lagerbock (10) auf einem Schlitten (11) angeordnet ist, der längs einer auf einem Schlittenträger (12) ausgebildeten Geradführung bewegbar ist und an dem Schlittenträger (12) eine Antriebsvorrichtung angeordnet ist, durch die der Schlitten (11) in die Lagerstellungen bewegbar ist.

2. Vorrichtung nach Anspruch 1, **dadurch gekennzeichnet, dass** die Lagerstellungen des wenigstens einen Lagerbocks (10) durch Anschlagmittel einstellbar sind, die die Bewegung des Lagerbocks (10) gegenüber dem Maschinengestell in beiden Bewegungsrichtungen begrenzen.

3. Vorrichtung nach Anspruch 1 oder 2, **dadurch gekennzeichnet, dass** die Lagerelemente des wenigstens einen Lagerbocks (10) auswechselbare Lagerschalen (18, 19) sind.

4. Vorrichtung nach einem der vorhergehenden Ansprüche, **dadurch gekennzeichnet, dass** die Antriebsvorrichtung einen pneumatischen Antriebszylinder (20) und ein Hebelgetriebe (24) zur Übertragung der Bewegung des Antriebszylinders (20) auf den Schlitten (11) aufweist.

5. Vorrichtung nach einem der vorhergehenden Ansprüche, **dadurch gekennzeichnet, dass** der Schlittenträger (12) in einer an dem Maschinengestell angeordneten, zur Lagerachse (L) parallelen Geradführung bewegbar gelagert ist

6. Vorrichtung nach einem der vorhergehenden Ansprüche, **dadurch gekennzeichnet, dass** an dem Maschinengestell ein Stellanrieb zum Bewegen des Schlittenträgers (12) in Richtung der Lagerachse (L) angeordnet ist.

## Claims

1. A device for receiving workpieces to be balanced in a machine for performing an unbalance correction, with a bearing device (2) arranged on a machine frame for supporting the workpiece (3) for rotation about a bearing axis (L), **characterized in that** the bearing device (2) includes at least one bearing block (10) having two bearing elements differing in diameter and lying next to each other in a direction transverse to the bearing axis (L), wherein the bearing block (10) is movable transversely to the bearing axis (L) of the bearing device into two bearing positions, and wherein in each of the two bearing positions another one of the two bearing elements is aligned centrally to the bearing axis (L), wherein the at least one bearing block (10) is adjustable relative to the machine frame in the direction of the bearing axis (L), and wherein the at least one bearing block (10) is arranged on a slide (11) movable along a straight-line guide provided on a slide carrier (12) and wherein the slide carrier (12) mounts a drive mechanism enabling the slide (11) to be moved into the bearing positions.

2. The device according to claim 1, **characterized in that** the bearing positions of the at least one bearing block (10) are adjustable by stop means which limit the movement of the bearing block (10) relative to the machine frame in both directions of movement.

3. The device according to any one of the claims 1 or 2, **characterized in that** the bearing elements of the at least one bearing block (10) are replaceable bearing shells (18, 19).

4. The device according to any one of the preceding claims, **characterized in that** the drive mechanism includes a pneumatic working cylinder (20) and a lever transmission (24) to transmit the movement of the working cylinder (20) to the slide (11).

5. The device according to any one of the preceding claims, **characterized in that** the slide carrier (12) is carried for movement in a straight-line guide arranged on the machine frame parallel to the bearing axis (L).

6. The device according to any one of the preceding claims, **characterized in that** the machine frame mounts an actuator for moving the slide carrier (12) in the direction of the bearing axis (L).

## Revendications

1. Dispositif pour recevoir des pièces à équilibrer dans une machine de correction de déséquilibre, avec un dispositif de palier (2) disposé sur un bâti de machine et servant à supporter la pièce (3) en rotation autour d'un axe de palier (L), **caractérisé en ce que** le dispositif de palier (2) comprend au moins un bloc de palier (10) ayant deux éléments de palier de diamètres différents et se trouvant l'un à côté de l'autre transversalement à l'axe de palier (L), le bloc de palier (10) étant mobile transversalement à l'axe de palier (L) du dispositif de palier dans deux positions de palier, et dans chacune des deux positions de palier, un autre des deux éléments de palier est aligné centré sur l'axe de palier (L), le au moins un bloc de palier (10) étant réglable dans la direction de l'axe de palier (L) par rapport au châssis de la machine, et le au moins un bloc de palier (10) étant disposé sur un chariot (11) mobile le long d'un guide droit formé sur un support de chariot (12), et un dispositif d'entraînement étant disposé sur le support de chariot (12), au moyen duquel le chariot (11) est mobile dans les positions de palier.

2. Dispositif selon la revendication 1, **caractérisé en ce que** les positions de palier de l'au moins un bloc de palier (10) peuvent être ajustées par des moyens de butée qui limitent dans les deux sens de déplacement le mouvement du bloc de palier (10) par rapport au châssis de la machine.

3. Dispositif selon la revendication 1 ou 2, **caractérisé en ce que** les éléments de palier du au moins un bloc de palier (10) sont des coussinets de palier interchangeables (18, 19).

4. Dispositif selon l'une des revendications précédentes, **caractérisé en ce que** le dispositif d'entraînement comprend un cylindre d'entraînement pneumatique (20) et une transmission à levier (24) pour transmettre le mouvement du cylindre d'entraînement (20) au chariot (11).

5. Dispositif selon l'une des revendications précédentes, **caractérisé en ce que** le support de chariot (12) est logé mobile dans un guide droit disposé sur le bâti de la machine et parallèle à l'axe de palier (L).

6. Dispositif selon l'une des revendications précédentes, **caractérisé en ce qu'**un actionneur est prévu sur le bâti de la machine pour déplacer le support de chariot (12) dans la direction de l'axe de palier (L).
